# EUROPÄISCHE PATENTSCHRIFT

(11) **EP 2 328 789 B1**
(45) Veröffentlichungstag und Bekanntmachung des Hinweises auf die Patenterteilung: **31.10.2012**
(21) Anmeldenummer: 09781656.5
(22) Anmeldetag: 10.08.2009
(51) Int. Cl.: B60W 30/20, B60W 20/00, B60W 10/06, B60W 10/08, B60K 6/52, B60K 23/08

(54) **VERFAHREN ZUM ANTREIBEN EINES HYBRIDFAHRZEUGS BEI EINEM LASTWECHSEL**
METHOD FOR DRIVING A HYBRID VEHICLE DURING A LOAD CHANGE
PROCÉDÉ D'ENTRAÎNEMENT D'UN VÉHICULE HYBRIDE EN CAS DE CHANGEMENT DE CHARGE

(30) Priorität: 29.08.2008 DE 102008041693
(43) Veröffentlichungstag der Anmeldung: 08.06.2011
(73) Patentinhaber: Robert Bosch GmbH, 70442 Stuttgart (DE)
(72) Erfinder: MAASS, Alexander, 71636 Ludwigsburg (DE); FALKENSTEIN, Jens-Werner, 73434 Aalen (DE); VOGELGESANG, Markus, 74379 Ingersheim (DE); KLOTZ, Benjamin, 80802 Muenchen (DE); HELLMANN, Manfred, 71706 Hardthof (DE)
(86) Internationale Anmeldenummer: PCT/EP2009/060326
(87) Internationale Veröffentlichungsnummer: WO 2010/023092

(56) Entgegenhaltungen:
- WO-A-2007/091172
- FR-A- 2 901 747
- US-A1- 2002 107 617
- US-A1- 2004 104 059

## Beschreibung

### Technisches Gebiet

Die vorliegende Erfindung betrifft das Gebiet der Hybridantriebe, insbesondere der Achshybride.

### Stand der Technik

Moderne Hybridfahrzeuge wie beispielsweise so genannte Achshybride sind mit Hybridantrieben ausgestattet, welche einen Elektromotor und einen Verbrennungsmotor aufweisen können. Die Achshybride zeichnen sich dadurch aus, dass eine der Fahrzeugachsen durch eine Antriebsquelle, beispielsweise einen Verbrennungsmotor, und die andere Fahrzeugachse durch eine andere Antriebsquelle, beispielsweise einen Elektromotor angetrieben werden. Der Elektromotor kann dabei beispielsweise im Falle einer Bremsung als Generator arbeiten, um die Bremsenergie zurückgewinnen und sie in einer Fahrzeugbatterie zu speichern. Ferner kann der Elektromotor dazu eingesetzt werden, bei erhöhtem Schlupf der Räder eine zuschaltbare Antriebsachse anzutreiben, wie es in der Druckschrift DE 3542059 C1 offenbart ist.

Zum Antreiben eines Fahrzeugs wird üblicherweise in Abhängigkeit von einer Gas- oder Fahrpedalstellung ein Vortriebsmoment erzeugt, welches sich bei einem Achshybrid stets aus einer Summe der die jeweiligen Fahrzeugachsen beaufschlagenden Drehmomente zusammensetzt. So stellen sich beispielsweise bei einer Gaspedalstellung von 0% eine leichte Verzögerung, welche mit einem negativen Vortriebsmoment, so genanntem Schub, von beispielsweise -20 Nm zusammenhängt, bei einer Gaspedalstellung von ca. 10% ein Antriebsmoment mit 0 Nm und bei einer Gaspedalstellung von über 10% ein positives Vortriebsmoment, ein so genannter Zug, ein.

Bei einem Wechsel des Vorzeichens des Vortriebsmoments, welcher beispielsweise mit einem Wechsel des Vortriebsmomentes vom Schub auf Zug zusammenhängt, oder bei einer Beschleunigungsumkehr des Fahrzeugs, bei welcher ein Vorzeichen der beschleunigenden Kraft geändert wird, tritt ein Lastwechsel ein, welcher einen Drehmoment-Nulldurchgang zur Folge haben kann. Der Drehmoment-Nulldurchgang kann den betroffenen Antriebsstrang in Schwingungen versetzen, welche sich negativ auf das Fahrverhalten des Fahrzeugs auswirken oder für den Fahrer unangenehm spürbar sein können. Eine Möglichkeit zur Verringerung der Lastwechselschwingungen besteht darin, den Nulldurchgang künstlich zu verlangsamen, was jedoch zur Folge hat, dass das Fahrzeug nach einer Gaspedalstellung bei weniger als 10% erst mit einem Zeitverzug wieder beschleunigen kann.

Ein Verfahren nach dem Oberbegriff des Anspruchs 1 ist aus der WO 2007/091172A bekannt.

### Offenbarung der Erfindung

Die vorliegende Erfindung basiert auf der Erkenntnis, dass die auf einen Lastwechsel zurückzuführenden Schwingungen reduziert werden können, wenn während des Lastwechsels, bei dem eine Änderung des Gesamtdrehmomentes bzw. des Vortriebsmomentes eintritt, beispielsweise durch eine Umkehr eines Vorzeichen des Vortriebsmomentes, die unterschiedlichen Wirkrichtungen, d.h. die unterschiedlichen Vorzeichen der Achsdrehmomente, beibehalten werden. So wird beispielsweise das Vorzeichen eines verbrennungsmotorisch erzeugten Drehmoments während des Lastwechsels des Fahrzeugs unverändert beibehalten, wodurch der vorgenannte Nulldurchgang an der verbrennungsmotorisch angetriebenen Fahrzeugachse vermieden werden kann. Um das Hybridfahrzeug dennoch abzubremsen, kann beispielsweise durch den Elektromotor ein negatives Drehmoment eingestellt werden, derart, dass die Summe der die Achsen des Hybridfahrzeugs beaufschlagenden Drehmomente ein negatives Gesamt- bzw. Vortriebsdrehmoment ergibt. Mit anderen Worten wird der Nulldurchgang nur desjenigen Achsdrehmomentes zugelassen, bei dem die geringsten Schwingungen zu erwarten sind, wie es beispielsweise bei dem elektromotorisch erzeugten Drehmoment der Fall sein kann. Alternativ wird nur der Nulldurchgang desjenigen Achsdrehmomentes zugelassen, welches den geringsten Maximalwert annehmen kann.

So sind aufgrund einer direkteren mechanischen Kopplung des Elektromotors mit einer elektromotorisch angetriebenen Achse bei dem Nulldurchgang des elektromotorisch erzeugten Drehmomentes geringere Fahrzeugschwingungen zu erwarten als dies bei einem Nulldurchgang des verbrennungsmotorisch erzeugten Drehmomentes der Fall ist.

Die Erfindung betrifft ein Verfahren zum Antreiben eines Hybridfahrzeugs nach Anspruch 1, mit Beaufschlagen einer ersten Hybridfahrzeugachse während des Lastwechsels mit einem ersten Drehmoment und Beaufschlagen einer zweiten Hybridfahrzeugachse während des Lastwechsels mit einem zweiten Drehmoment, dessen Wirkrichtung entgegengesetzt zu einer Wirkrichtung des ersten Drehmomentes ist.

Gemäß einer Ausführungsform umfasst der Lastwechsel eine Beschleunigungsumkehr, insbesondere einen Beschleunigungsvorzeichenwechsel, oder eine Beschleunigungsänderung oder einen Antriebslastwechsel oder eine Änderung eines Vorzeichens einer Summe aller Antriebsmomente oder einen Vorzeichenwechsel eines Gesamtvortriebsmoments, insbesondere einen Wechsel vom Schub auf Zug oder vom Zug auf Schub.

Gemäß einer Ausführungsform werden die Wirkrichtungen des ersten Drehmomentes und/oder des zweiten Drehmomentes während des Lastwechsels beibehalten, sodass keine der Achsen einen Lastwechsel vollzieht.

Gemäß einer Ausführungsform werden nach einer vorbestimmten Zeit nach Eintritt des Lastwechsels die erste Hybridfahrzeugachse und die zweite Hybridfahrzeugachse jeweils mit Drehmomenten gleicher Wirkrichtung, d.h. gleichen Vorzeichens, beaufschlagt. Hierzu kann die Wirkrichtung des ersten oder des zweiten Drehmomentes geändert werden, sodass der Lastwechsel nur eines der Drehmomente betrifft. Ferner werden dadurch keine weiteren Schwingungen verursacht.

Gemäß einer Ausführungsform wird der Lastwechsel durch ein Abbremsen des Hybridfahrzeugs herbeigeführt, wobei während des Lastwechsels die Wirkrichtung des ersten Drehmomentes mit einer Rotationsrichtung der ersten Hybridfahrzeugachse zusammenfällt und die Wirkrichtung des zweiten Drehmomentes entgegengesetzt zu einer Rotationsrichtung der zweiten Hybridfahrzeugachse ist. Die Abbremsung kann daher durch eine Umkehr einer Drehrichtung eines einzigen Drehmomentes realisiert werden.

Gemäß einer Ausführungsform werden die erste Hybridfahrzeugachse durch einen Verbrennungsmotor oder durch einen Elektromotor und die zweite Hybridfahrzeugachse durch einen Elektromotor oder durch einen Verbrennungsmotor angetrieben werden. Bevorzugt wird zur Lastwechselregelung nur das elektromotorisch erzeugte Drehmoment geändert.

Gemäß einer Ausführungsform werden die erste Hybridfahrzeugachse und die zweite Hybridfahrzeugachse gleichzeitig mit dem jeweiligen Drehmoment beaufschlagt, sodass eine einfache Erzeugung eines Gesamtdrehmomentes möglich ist.

Gemäß einer Ausführungsform wird bei dem Lastwechsel ein Wert des ersten Drehmoments konstant beibehalten, wodurch dessen Nulldurchgang vermieden wird.

Gemäß einer Ausführungsform werden das erste Drehmoment und/oder das zweite Drehmoment in Abhängigkeit von einer Differenz zwischen einem Ist-Gesamtdrehmoment, insbesondere einem positiven Ist-Gesamtdrehmoment, und einem Soll-Gesamtdrehmoment, insbesondere einem negativen Soll-Gesamtdrehmoment, bestimmt, wobei das erste und das zweite Drehmoment derart erzeugt werden, dass deren Summe dem Soll-Gesamtdrehmoment entspricht. Dadurch ist eine einfache Bestimmung des zu erzeugenden Summendrehmomentes möglich.

Gemäß einer Ausführungsform werden das erste Drehmoment oder das zweite Drehmoment oder die Wirkrichtung des ersten oder des zweiten Drehmomentes anhand eines benutzer- oder betriebsabhängigen Parameters, insbesondere anhand einer Gaspedalstellung oder eines Gangwechsels oder einer Motordrehzahl, oder einem Fahrbetrieb oder einem Getriebegang oder einer Steigung oder eines Gefälles einer zu befahrenden Straße oder einer Motordrehzahl oder einer Dynamik von Gaspedalbewegungen oder in Abhängigkeit von einem Ladezustand einer Batterie oder von mehr als einem der vorgenannten Parameter gewählt.

Die Erfindung betrifft ferner eine programmtechnisch eingerichtete Vorrichtung, insbesondere ein Steuergerät, welche ausgebildet ist, ein Computerprogramm zum Ausführen des erfindungsgemäßen Verfahrens ablaufen zu lassen.

### Zeichnungen

Ein Ausführungsbeispiel wird Bezug nehmend auf die beiliegenden Zeichnungen erläutert. Es zeigen:
- Fig. 1:: ein Hybridfahrzeug mit zwei Antriebsachsen; und
- Fig. 2: zeitliche Drehmomentverläufe.

### Beschreibung der Ausführungsform

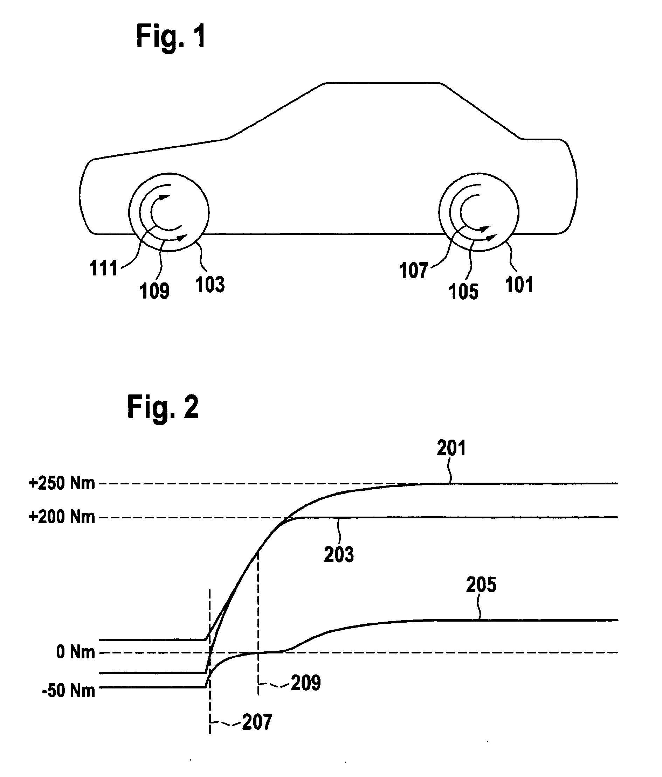

Das in Fig. 1 dargestellte Hybridfahrzeug umfasst eine erste Achse 101, welche mit einem verbrennungsmotorisch erzeugten Drehmoment beaufschlagt wird, und eine zweite Achse 103, welche mit einem elektromotorisch erzeugten Drehmoment beaufschlagt wird.

Bei einem Fahrzeug-Lastwechsel, bei dem eine Änderung des Gesamtdrehmomentes bei einem Übergang von einem Zugzustand zu einem Schubzustand eintritt, ist es notwendig, ein negatives Gesamtdrehmoment zu erhalten. Hierzu wird das Vorzeichen des Drehmomentes an der Fahrzeugachse 101 positiv beibehalten, während das Drehmoment an der Fahrzeugachse 103 einen Nulldurchgang erfährt und negativ wird. Das negative Drehmoment wird so gewählt, dass bei einer Gaspedalstellung von 0% die Summe der auf die Achsen des Hybridfahrzeugs wirkenden Drehmomente ein negatives Gesamtdrehmoment ergibt, wodurch das Fahrzeug abbremst. Im Sinne der vorliegenden Erfindung ist ein Drehmoment positiv, falls dessen Wirkrichtung mit einer Achsenrotationsrichtung zusammenfällt, und negativ, falls dessen Wirkrichtung entgegengesetzt zu der Achsenrotationsrichtung ist.

Die Wirkrichtungen der Drehmomente bezüglich der Fahrzeugachsen bei einer Gaspedalstellung von 0% sind in Fig. 1 dargestellt. Die Rotationsrichtungen beider Achsen 101 und 103 sind gleich und derart ausgerichtet, dass das Hybridfahrzeug vorwärts bewegt wird. So fällt die Wirkrichtung 105 des verbrennungsmotorisch erzeugten Drehmomentes an der ersten Fahrzeugachse 101 mit einer Rotationsrichtung 107 der ersten Fahrzeugachse 101 zusammen, so dass das Vorzeichen dieses Drehmomentes positiv ist. Im Unterschied hierzu ist die Wirkrichtung 109 des elektromotorisch erzeugten Drehmomentes an der zweiten Fahrzeugachse 103 entgegengesetzt zu einer Rotationsrichtung 111 der zweiten Fahrzeugachse 103, so dass das Vorzeichen des elektromotorischen Drehmomentes negativ ist.

Wird das Fahrzeug nach erfolgtem Lastwechsel oder einer Bewegung des Gaspedals auf 50% erneut beschleunigt, so kann das verbrennungsmotorisch erzeugte Drehmoment an der Achse 101 ohne einen Nulldurchgang erhöht werden, so dass eine schnelle und vibrationsarme Wiederbeschleunigung ermöglicht wird.

Der jeweilige Betriebsmodus bzw. zu erwartende Lastwechsel ist anhand der Gaspedalstellung erfassbar. So kann bei einer Gaspedalstellung von 0% die durch den Elektromotor angetriebene Fahrzeugachse mit einem bremsenden Drehmoment von beispielsweise -30 Nm beaufschlagt werden, während die durch den Verbrennungsmotor angetriebene Achse im Vortrieb mit einem Drehmoment von +15 Nm beaufschlagt werden kann. Dadurch ergibt sich ein Gesamtdrehmoment von -15 Nm, so dass das Fahrzeug abgebremst wird. Das Vortriebsmoment an der durch den Verbrennungsmotor angetriebenen Achse kann bei einer Gaspedalstellung von 0% jedoch auch +5 Nm oder +10 Nm betragen. Bevorzugt wird das Drehmoment positiv und so groß gewählt, dass der Antriebsstrang dieser Achse auch beim Überfahren von Bodenwellen nicht in Schwingungen versetzt wird.

Bei einer Gaspedalstellung von 50% wird die durch den Elektromotor angetriebene Achse beispielsweise mit einem bremsenden Drehmoment von -15 Nm beaufschlagt. Gleichzeitig wird die verbrennungsmotorisch angetriebene Achse im Vortrieb mit beispielsweise +100 Nm beaufschlagt, so dass sich ein Gesamtdrehmoment von +85 Nm ergibt. Dieser Betriebsmodus kann bei sportlicher Fahrt gewählt werden.

Zum weiteren Beschleunigen des Hybridfahrzeugs werden beide Achsen hingegen mit einem positiven Drehmoment beaufschlagt. So ist bei einer Gaspedalstellung von 100% die elektromotorisch angetriebene Achse im Vortrieb mit beispielsweise +100 Nm zu beaufschlagen, während die verbrennungsmotorisch angetriebene Achse mit einem Vortriebsdrehmoment von +300 Nm zu beaufschlagen ist. Folgt dieser Betriebsmodus einem Betriebsmodus, bei dem das Hybridfahrzeug abgebremst worden ist, so durchläuft das Drehmoment, mit dem die elektromotorisch angetriebene Achse beaufschlagt wird, einen Vorzeichenwechsel, d.h. einen Nulldurchgang, während das verbrennungsmotorisch erzeugte Drehmoment ohne Vorzeichenwechsel erhöht werden kann. Dadurch wird vermieden, dass das verbrennungsmotorisch erzeugte Drehmoment einen Nulldurchgang erfährt.

Sind bei einer Gaspedalstellung von 0% die Achsmomente derart gewählt, dass an einer der Achsen eine Drehmoment-Wirkrichtung mit einer Rotationsrichtung dieser Achse zusammenfällt und an einer anderen Achse eine Drehmoment-Wirkrichtung entgegen einer Rotationsrichtung dieser Achse ist, so kann es zu einem verstärktem Reifenabrieb kommen. Daher werden die Wirkrichtungen der Drehmomente nach einer vorgegebenen Zeit nach Eintritt des Lastwechsels, beispielsweise nach 10s oder 20s, gleich gewählt.

Ferner kann Drehmoment oder dessen Wirkrichtung für jede Achse in Abhängigkeit von einem Fahrbetriebmodus, beispielsweise einem Sportmodus oder einem ökonomischen Modus, von dem gewählten Gang, von einer Steigung oder von einem Gefälle der zu befahrenden Straße, von einer Motordrehzahl, von einer Dynamik der Gaspedalbewegungen des Fahrers, beispielsweise bei schnellen oder häufigen Gaspedalbewegungen, oder in Abhängigkeit von einem Ladezustand der Batterie oder von mehr als einem der vorgenannten Parameter gewählt werden.

Der Nulldurchgang des elektromotorisch erzeugten Drehmomentes kann zu einem späteren Zeitpunkt als der Lastwechsel des Fahrzeugs, beispielsweise der Nulldurchgang des Fahrzeugvortriebs, erfolgen, wie es in Fig. 2 dargestellt ist. Der Nulldurchgang des Achsmoments kann jedoch auch beispielsweise zu einem Zeitpunkt durchgeführt werden, zu dem ein Getriebegangwechsel durchgeführt wird, so dass dabei eventuell auftretende Schwingungen maskiert werden.

Fig. 2 zeigt einen zeitlichen Verlauf eines Gesamtdrehmomentes 201, eines ersten Drehmomentes 203, mit welchem die erste Fahrzeugachse 101 beaufschlagt wird, und eines zweiten Drehmomentes 205, mit welchem die zweite Fahrzeugachse 103 beaufschlagt wird. Ausgehend von einer gebremsten Fahrt nach einem Fig. 2 nicht dargestellten, zuvor stattgefundenen Lastwechsel, findet zum Zeitpunkt 207 ein erneuter Lastwechsel statt, bei dem das Gesamtdrehmoment 201 einen Nulldurchgang erfährt und positiv wird. Zu diesem Zeitpunkt sind die Wirkrichtungen der Drehmomente 203 und 205 unterschiedlich, sodass das zum Zeitpunkt des Lastwechsels das erste Drehmoment 203 positiv und das zweite Drehmoment 205 negativ ist. Nach erfolgtem Lastwechsel steigen beide Drehmomente an, wobei das zweite Drehmoment 205 zum Zeitpunkt 209 einen Nulldurchgang erfährt und positiv wird, sodass ab diesem Zeitpunkt die Wirkrichtungen beider Drehmomente gleich sind. Das Zeitintervall zwischen den Zeitpunkten 207 und 209 legt eine vorbestimmte Zeit fest, beispielsweise 1s oder 2s, nach deren Ablauf die Wirkrichtungen beider Drehmomente in einen Gleichlauf überführt werden.

Erfindungsgemäß werden somit die durch das Achshybridkonzept bereitgestellten Freiheitsgrade effizient ausgenutzt. So kann im Schub das Antriebsmoment auf der durch den Verbrennungsmotor angetriebenen Achse, positiv bleiben. Somit wird erreicht, dass der Lastwechsel, z.B. die Beschleunigungsumkehr des Fahrzeugs, nur an einer Achse einen Nulldurchgang erfordert.

## Patentansprüche

1. Verfahren zum Antreiben eines Hybridfahrzeugs während eines Lastwechsels von einem Schubzustand zu einem Zugzustand, mit:
- Beaufschlagen einer ersten Hybridfahrzeugachse (101) während des Lastwechsels mit einem ersten Drehmoment; und
- Beaufschlagen einer zweiten Hybridfahrzeugachse (103) während des Lastwechsels mit einem zweiten Drehmoment, dessen Wirkrichtung entgegengesetzt zu einer Wirkrichtung des ersten Drehmoments ist,
wobei die erste Hybridfahrzeugachse (101) durch einen Verbrennungsmotor und die zweite Hybridfahrzeugachse (103) durch einen Elektromotor angetrieben werden, **dadurch gekennzeichnet, dass** die Wirkrichtungen des ersten Drehmoments und des zweiten Drehmoments während des Lastwechsels beibehalten werden und nach einer vorbestimmten Zeit nach erfolgtem Lastwechsel die erste Hybridfahrzeugachse (101) und die zweite Hybridfahrzeugachse (103) jeweils mit Drehmomenten gleicher Wirkrichtung beaufschlagt werden, wozu die Wirkrichtung des zweiten Drehmoments geändert wird.

2. Verfahren gemäß Anspruch 1, wobei der Lastwechsel eine Änderung eines Vorzeichens einer Summe aller Antriebsmomente umfasst.

3. Verfahren gemäß einem der vorhergehenden Ansprüche, bei dem die erste Hybridfahrzeugachse (101) und die zweite Hybridfahrzeugachse (103) gleichzeitig mit dem jeweiligen Drehmoment beaufschlagt werden.

4. Verfahren gemäß einem der vorhergehenden Ansprüche, bei dem das erste Drehmoment und/oder das zweite Drehmoment in Abhängigkeit von einer Differenz zwischen einem Ist-Gesamtdrehmoment, insbesondere einem positiven Ist-Gesamtdrehmoment, und einem Soll-Gesamtdrehmoment, insbesondere einem negativen Soll-Gesamtdrehmoment, bestimmt werden, wobei das erste und das zweite Drehmoment derart erzeugt werden, dass deren Summe dem Soll-Gesamtdrehmoment entspricht.

5. Verfahren gemäß einem der vorhergehenden Ansprüche, bei dem das erste Drehmoment oder das zweite Drehmoment oder die Wirkrichtung des ersten oder des zweiten Drehmoments anhand eines benutzer- oder betriebsabhängigen Parameters, insbesondere anhand einer Gaspedalstellung oder eines Gangwechsels oder einer Motordrehzahl, oder eines Fahrbetriebs oder eines Getriebegangs oder einer Steigung oder eines Gefälles oder einer zu befahrenden Straße oder einer Motordrehzahl oder einer Dynamik von Gaspedalbewegungen oder in Abhängigkeit von einem Ladezustand einer Batterie oder von mehr als einem der vorgenannten Parameter gewählt werden.

6. Programmtechnisch eingerichtete Vorrichtung, insbesondere ein Steuergerät, welche ausgebildet ist, ein Computerprogramm zum Ausführen des Verfahrens gemäß einem der Ansprüche 1 bis 5 ablaufen zu lassen.

## Claims

1. Method for driving a hybrid vehicle during a change in load from an overrun state to a traction state, comprising:
- application of a first torque to a first hybrid vehicle axle (101) during the change in load; and
- application of a second torque to a second hybrid vehicle axle (103) during the change in load, the direction of action of the said second torque being opposite to a direction of action of the first torque,
with the first hybrid vehicle axle (101) being driven by an internal combustion engine and the second hybrid vehicle axle (103) being driven by an electric motor, **characterized in that** the directions of action of the first torque and of the second torque are maintained during the change in load and, after a predetermined time following the change in load, torques with the same direction of action are applied to the first hybrid vehicle axle (101) and to the second hybrid vehicle axle (103) in each case, the direction of action of the second torque being changed for this purpose.

2. Method according to Claim 1, with the change in load comprising a change in a mathematical sign of a sum of all the drive torques.

3. Method according to either of the preceding claims, in which the respective torque is applied to the first hybrid vehicle axle (101) and to the second hybrid vehicle axle (103) at the same time.

4. Method according to one of the preceding claims, in which the first torque and/or the second torque are/is determined as a function of a difference between an actual total torque, in particular a positive actual total torque, and a setpoint total torque, in particular a negative setpoint total torque, with the first and the second torque being generated in such a way that the sum of the said torques corresponds to the setpoint total torque.

5. Method according to one of the preceding claims, in which the first torque or the second torque or the direction of action of the first or of the second torque are selected on the basis of a user- or operation-dependent parameter, in particular on the basis of an accelerator pedal position or a gear change or an engine rotation speed, or on the basis of a driving operation or a gear speed or an uphill incline or a downhill incline or a road which is to be driven along or an engine rotation speed or dynamics of accelerator pedal movements or as a function of a state of charge of a battery or as a function of more than one of the abovementioned parameters.

6. Programmable apparatus, in particular a controller, which is designed to run a computer program for implementing the method according to one of Claims 1 to 5.

## Revendications

1. Procédé d'entraînement d'un véhicule hybride pendant un changement de charge d'un état de poussée à un état de traction, avec :
- sollicitation d'un premier essieu de véhicule hybride (101) pendant le changement de charge avec un premier couple de rotation ; et
- sollicitation d'un deuxième essieu de véhicule hybride (103) pendant le changement de charge avec un deuxième couple de rotation dont la direction d'action est opposée à une direction d'action du premier couple de rotation ;
le premier essieu de véhicule hybride (101) étant entraîné par un moteur à combustion interne et le deuxième essieu de véhicule hybride (103) étant entraîné par un moteur électrique, **caractérisé en ce que** les directions d'action du premier couple de rotation et du deuxième couple de rotation sont maintenues pendant le changement de charge et qu'après un temps prédéterminé après un changement de charge réussi, le premier essieu de véhicule hybride (101) et le deuxième essieu de véhicule hybride (103) sont respectivement sollicités avec des couples de rotation orientés dans la même direction d'action, ce pour quoi la direction d'action du deuxième couple de rotation est modifiée.

2. Procédé selon la revendication 1, le changement de charge comprenant une modification d'un signe d'une somme de tous les couples d'entraînement.

3. Procédé selon l'une quelconque des revendications précédentes, dans lequel le premier essieu de véhicule hybride (101) et le deuxième essieu de véhicule hybride (103) sont simultanément sollicités avec un couple de rotation respectif.

4. Procédé selon l'une quelconque des revendications précédentes, dans lequel le premier couple de rotation et/ou le deuxième couple de rotation sont définis en fonction d'une différence entre un couple de rotation total réel, notamment un couple de rotation total réel positif, et un couple de rotation total théorique, notamment un couple de rotation total théorique négatif, le premier et le deuxième couple de rotation étant produits de façon à ce que leur somme corresponde au couple de rotation total théorique.

5. Procédé selon l'une quelconque des revendications précédentes, dans lequel le premier couple de rotation ou le deuxième couple de rotation ou la direction d'action du premier ou du deuxième couple de rotation sont choisis à l'aide d'un paramètre dépendant d'un utilisateur ou d'un mode de fonctionnement, notamment à l'aide d'une position de pédale d'accélération ou d'un changement de rapport ou d'une vitesse de rotation du moteur, ou d'un mode de conduite ou d'un rapport de boîte de vitesses ou d'une côte et d'une descente ou d'une route à parcourir ou d'une vitesse de rotation du moteur ou d'une dynamique de mouvements de pédale d'accélération ou en fonction d'un état de charge d'une batterie ou de plus d'un des paramètres précités.

6. Dispositif utilisé en technologie des programmes, notamment appareil de commande réalisé pour laisser tourner un programme informatique afin de mettre en oeuvre le procédé selon l'une quelconque des revendications 1 à 5.
